# FASCICULE DE BREVET EUROPEEN

(11) **EP 3 319 835 B1**
(45) Date de publication et mention de la délivrance du brevet: **30.03.2022**
(21) Numéro de dépôt: 16750900.9
(22) Date de dépôt: 29.06.2016
(51) Int. Cl.: B60Q 1/04, B60Q 1/26, F21S 45/30

(54) **ÉLÉMENT DE DISPOSITIF D'ÉCLAIRAGE LIMITANT LA RÉTENTION D'EAU A PROXIMITÉ D'UN JOINT D'ÉTANCHÉITÉ**
BELEUCHTUNGSVORRICHTUNGSELEMENT ZUR REDUZIERUNG DER WASSERRETENTION IN DER NÄHE EINER DICHTUNG
LIGHTING DEVICE ELEMENT WHICH REDUCES WATER RETENTION NEAR A SEAL

(30) Priorité: 09.07.2015 FR 1556534
(43) Date de publication de la demande: 16.05.2018
(73) Titulaire: Renault s.a.s, 92100 Boulogne Billancourt (FR)
(72) Inventeur: BEN-LETAIFA, Meriem, 75012 Paris (FR); BAILLARGUET, Gilles, 78990 Elancourt (FR)
(74) Mandataire: Renault Group
(86) Numéro de dépôt international: PCT/FR2016/051609
(87) Numéro de publication internationale: WO 2017/006014

(56) Documents cités:
- EP-A1- 0 745 510
- JP-A- H08 306 212
- US-B1- 6 247 831

## Description

L'invention concerne un élément de dispositif d'éclairage limitant la rétention d'eau à proximité d'un joint d'étanchéité.

La présente invention est plus particulièrement destinée aux dispositifs d'éclairage de véhicule automobile mais pourrait également être destinée à tout dispositif d'éclairage nécessitant une étanchéité par rapport à une surface de fixation ou d'appui.

Un feu de signalisation de véhicule automobile , comme par exemple celui connu du document EP 0 745 510 A1, comporte habituellement un boîtier fermé par une vitre recevant une ou plusieurs sources de lumière. Un tel feu est fixé par l'arrière du boîtier à la caisse du véhicule. Afin de protéger le feu des entrées d'eau, une partie de l'arrière du boîtier forme un logement recevant les éléments de connexion et dont le pourtour est fixé de manière étanche à la caisse du véhicule. A cet effet, un joint plat est en appui d'un côté sur la caisse et de l'autre côté sur tout le pourtour du bord du logement. Pour un meilleur maintien du joint, des cloisons d'appui sont en outre prévues sur le logement, à l'extérieur de ce dernier, agencées pour prendre appui contre le joint afin d'exercer une pression sur le joint en direction de la caisse. Ces cloisons s'étendant sensiblement perpendiculairement au plan du joint, il arrive que de l'eau stagne entre elles et le joint et reste ainsi en contact prolongé avec le joint. Cette eau stagnante est susceptible de fragiliser le joint et de détériorer ses caractéristiques techniques et, à terme, l'étanchéité entre le logement et la caisse.

L'invention vise à pallier ces inconvénients en proposant un élément d'un dispositif d'éclairage présentant :
- une cavité définie par une paroi latérale et une paroi de fond, ladite cavité logeant au moins un élément de connexion électrique, la cavité présentant un bord libre d'appui conformé pour recevoir un joint plat destiné à être disposé sensiblement perpendiculairement à ladite paroi latérale,
- des nervures solidaires d'une face de la paroi latérale opposée à la cavité, ces nervures s'étendant sensiblement perpendiculairement à la paroi latérale, chaque nervure définissant un bord d'appui conformé pour recevoir en appui ledit joint plat lorsqu'il est disposé sensiblement perpendiculairement à ladite paroi latérale,
caractérisé en ce qu'au moins une des nervures est une nervure échancrée, dont le bord d'appui présente une échancrure s'étendant le long de la paroi latérale depuis le bord libre d'appui de la cavité.

Autrement dit, lorsque le joint plat est en place, une nervure échancrée ne présente pas de bord d'appui le long de la paroi latérale et du bord libre d'appui de la cavité, ce bord d'appui n'étant en appui contre le joint qu'à une distance prédéterminée de la paroi latérale de la cavité. Ainsi, de l'eau présente le long de cette paroi latérale et du bord libre d'appui de la cavité pourra s'écouler via l'échancrure, notamment lorsque la paroi latérale est inclinée, ou pourra au moins se répartir de part et d'autre de la nervure si la paroi latérale est horizontale. Dans tous les cas, l'éventuelle couche d'eau résiduelle recouvrant la paroi latérale est de moindre épaisseur que si le bord d'appui de la nervure s'étendait sans discontinuité depuis le bord libre d'appui de la cavité. De fait, le joint est moins sujet à la détérioration et l'étanchéité peut être maintenue plus longtemps.

Par ailleurs, bien que le bord d'appui d'une nervure échancrée présente une longueur inférieure à celle du bord d'appui d'une nervure non échancrée du fait de la présence de l'échancrure, chaque nervure échancrée présente toujours un bord d'appui exerçant une pression sur le joint et participant à son appui. Ainsi, une évacuation de l'eau est possible sans réduction notable de la fonction d'appui sur le joint d'une nervure échancrée, de sorte que la fonction d'étanchéité des nervures est préservée.

Cette stagnation de l'eau est le plus souvent observée sur des parties supérieures de la paroi latérale dans la position d'utilisation du dispositif d'éclairage. Aussi, selon un mode de réalisation, dans cette position d'utilisation, ladite au moins une nervure échancrée peut avantageusement être solidaire d'une partie supérieure de la paroi latérale de la cavité.

L'éventuelle couche d'eau résiduelle présentera une épaisseur d'autant plus faible qu'elle peut s'étaler sur la plus grande surface possible. Avantageusement, l'élément selon l'invention peut ainsi comporter plusieurs nervures échancrées, notamment adjacentes.

Lorsque l'élément selon l'invention présente une pluralité de nervures échancrées adjacentes, celles-ci peuvent avantageusement être solidaires d'une partie supérieure de la paroi latérale formant un angle non nul par rapport à un plan horizontal. Ceci peut favoriser l'écoulement de l'eau le long de la paroi latérale via les échancrures des nervures échancrées.

Les nervures adjacentes peuvent alors présenter des échancrures d'aire croissante dans la direction d'inclinaison. Cette direction d'inclinaison peut être définie comme étant la direction d'écoulement d'un liquide sur la surface externe de la partie supérieure de la paroi latérale. Ainsi, une aire croissante des échancrures de nervures adjacente permet de favoriser l'écoulement et l'évacuation de l'eau via les échancrures.

L'élément selon l'invention peut faire partie d'un boîtier de dispositif d'éclairage ou d'un support de source lumineuse du dispositif d'éclairage ou d'un capot de fermeture du boîtier du dispositif d'éclairage, notamment pour véhicule automobile.

L'invention concerne également un dispositif d'éclairage comprenant un élément selon l'invention et un joint plat en appui sur le bord libre d'appui de la cavité et sur les bords d'appui des nervures avec ou sans échancrures. Notamment, le plan de ce joint plat s'étend sensiblement perpendiculairement aux nervures et à la paroi latérale de la cavité.

L'invention concerne également un véhicule comprenant un dispositif d'éclairage selon l'invention monté sur un élément de caisse du véhicule, le joint plat étant appliqué contre l'élément de caisse dudit véhicule.

Le dispositif d'éclairage peut ainsi être un feu de signalisation, avant ou arrière, peut notamment être choisi parmi un feu de jour (feu s'allumant automatiquement lorsque le véhicule se met en mouvement, également connu sous l'acronyme anglais « DRL »), un feu de position, un feu de recul, un feu de brouillard, un feu clignotant, un feu stop ou tout autre feu de signalisation.

L'invention est maintenant décrite en référence aux dessins annexés, non limitatifs, dans lesquels :
- la figure 1 représente une vue en perspective d'un élément de dispositif d'éclairage selon un mode de réalisation de l'invention ;
- la figure 2 représente une autre vue en perspective de l'élément de la figure 1, un joint plat étant monté sur cet élément.

Dans la présente description, les termes avant, arrière, supérieur, inférieur, font référence aux directions avant, arrière, supérieure, inférieure, du véhicule, lorsque le dispositif d'éclairage est en position d'utilisation, monté sur le véhicule. Les axes X, Y, Z, correspondent respectivement à l'axe longitudinal (d'avant en arrière), transversal et vertical du véhicule.

Bien entendu, les termes supérieur et inférieur font référence à la position d'utilisation du dispositif d'éclairage, qu'il s'agisse d'un dispositif d'éclairage de véhicule automobile ou non.

Par sensiblement horizontal, longitudinal ou vertical, on entend une direction/un plan formant un angle d'au plus ±20°, voire d'au plus 10° ou d'au plus 5° avec une direction/un plan horizontal, longitudinal ou vertical.

Par sensiblement parallèle, perpendiculaire ou à angle droit, on entend une direction/un angle s'écartant d'au plus ±20°, voire d'au plus 10° ou d'au plus 5° d'une direction parallèle, perpendiculaire ou d'un angle droit.

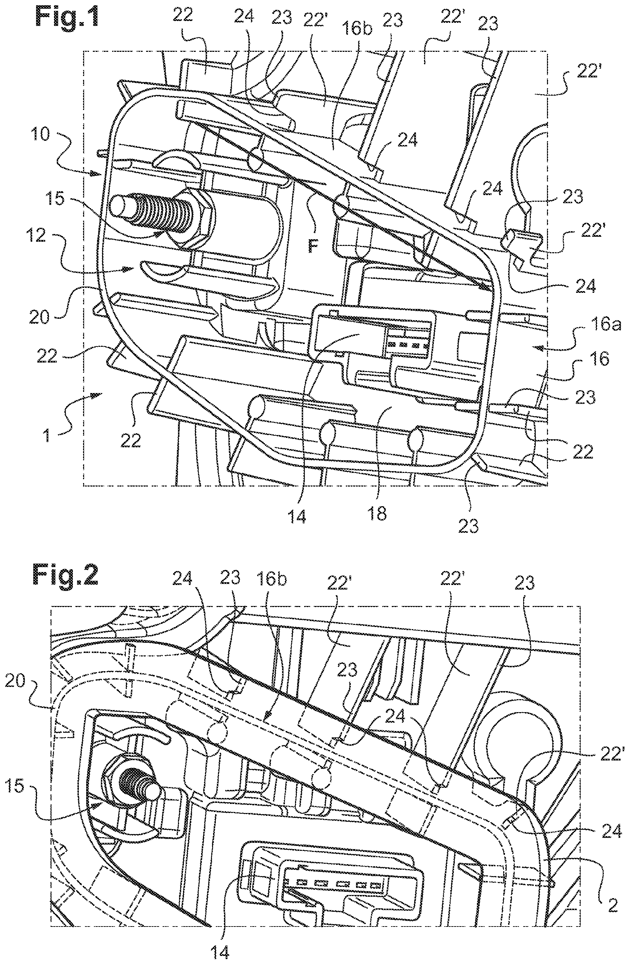

La figure 1 représente un élément 10 faisant partie d'un dispositif d'éclairage 1, lequel est représenté partiellement sur la figure 1. Le dispositif d'éclairage est notamment du type comprenant un boitier recevant une ou plusieurs sources de lumière, ce boitier étant fermé par une vitre translucide ou transparente (non représentée). Afin de permettre l'alimentation en électricité de la ou des sources de lumière, le dispositif d'éclairage comprend habituellement un ou plusieurs éléments de connexion électrique.

L'élément 10 de la présente invention comporte une cavité 12 logeant au moins un élément de connexion électrique 14. Dans l'exemple représenté, l'élément 10 présente également une partie de fixation 15 du boîtier. La cavité 12 est définie par une paroi latérale 16 et une paroi de fond 18. La paroi de fond 18 porte ici l'élément de connexion 14.

La paroi latérale 16 forme une surface fermée entourant entièrement la paroi de fond 18. On notera ainsi que la cavité 12 est ouverte du côté opposé au fond 18.

La cavité 12 présente en outre un bord libre d'appui 20, conformé pour recevoir un joint plat 2 destiné à être disposé sensiblement perpendiculairement à la paroi latérale 16, tel que représenté sur la figure 2. On notera que le bord libre d'appui 20 forme une ligne fermée destinée à être appuyée sur un élément de support (non représenté) pour le dispositif d'éclairage, par exemple dans le cas d'un véhicule automobile, un élément de la caisse du véhicule.

L'élément 10 du dispositif d'éclairage comprend également une pluralité de nervures 22 solidaires d'une face 16a de la paroi latérale 16, opposée à la cavité 12. Autrement dit, la surface 16a est externe à la cavité 12. Les nervures 22 s'étendent sensiblement perpendiculairement à la paroi latérale 16, chaque nervure 22 définissant un bord d'appui 23 conformé pour recevoir en appui le joint plat 2 lorsqu'il est disposé sensiblement perpendiculairement à la paroi latérale 16, tel que représenté sur la figure 2.

L'élément 10 de dispositif d'éclairage présente en outre une ou plusieurs nervures 22' échancrées, à savoir dont le bord d'appui 23 comporte une échancrure 24 s'étendant depuis le bord libre d'appui 20 de la cavité 12, le long de la paroi latérale 16. Ainsi, tel que visible sur les figures 1 et 2, le bord d'appui 23 de chaque nervure 22 échancrée est situé à distance du bord libre d'appui 20 de la cavité 12. Par cette configuration, de l'eau qui se trouverait retenue prisonnière entre les nervures 22, la paroi 16 et le joint 2 peut s'écouler par les échancrures 24 et soit se répartir entre les nervures 22, 22', soit être évacuée.

Dans la position d'utilisation du dispositif d'éclairage 1, position représentée sur les figures 1 et 2, les nervures échancrées 22' sont solidaires d'une partie 16b supérieure de la paroi 16. En fonction de la dimension de l'élément 10, une ou plusieurs nervures échancrées 22' peuvent être prévues.

Dans l'exemple représenté, l'élément 10 présente plusieurs nervures échancrées 22', notamment des nervures adjacentes. On notera également dans l'exemple représenté que la partie supérieure 16b de la paroi latérale 16 forme un angle non nul par rapport à un plan horizontal. Cet angle non nul peut être choisi pour permettre un écoulement de l'eau suivant la flèche F représenté sur la figure 1, sur la face externe de la partie supérieure 16a de la paroi latérale. Bien entendu, plus l'angle est important, plus l'écoulement de l'eau en sera facilité. Cet angle peut par exemple être de l'ordre de 5°, des angles inférieurs à 5° étant cependant envisageables.

Du fait de l'inclinaison de la partie supérieure 16b de la paroi latérale 16, l'eau a tendance à s'accumuler de plus en plus dans la direction d'inclinaison de la paroi latérale 16. Il peut dès lors être avantageux de réaliser dans des nervures 22' adjacentes des échancrures 24 d'aire croissante dans cette direction d'inclinaison. Ainsi, dans l'exemple représenté, la nervure échancrée 22' située le plus haut et le plus à gauche sur les figures 1 et 2 présente une échancrure 24 d'aire inférieure à l'échancrure 24 de la nervure échancrée 22' adjacente placée immédiatement à sa droite. De manière similaire, la nervure échancrée 22' suivante sur la droite présente également une échancrure 24 d'aire plus importante, et ainsi de suite, dans la direction d'inclinaison. Ainsi, lorsque l'eau commence à s'écouler par la nervure échancrée 22' la plus haute et la plus à gauche, une quantité d'eau de plus en plus importante dans la direction de la flèche F peut cependant s'écouler de manière fluide et rapide du fait de l'aire croissante des échancrures 24 dans la direction de la flèche F.

L'invention n'est pas limitée par une forme particulière des échancrures 24, pourvu qu'elles créent une discontinuité dans le bord d'appui 23 des nervures échancrées 22', à proximité immédiate du bord libre d'appui 20 de la cavité 12. De même, les dimensions des échancrures 24 pourront être déterminées en fonction de l'utilisation et de la quantité d'eau attendue pouvant s'accumuler. Par exemple, la profondeur des échancrures 24, à savoir leur dimension perpendiculairement au bord d'appui 23 et au bord libre d'appui 20 de la cavité, peut être déterminée en fonction des dimensions de la paroi latérale 16, du nombre de nervures 22, 22' et de la quantité d'eau attendue pouvant se retrouver piégée entre les nervures 22, 22', le joint 2 et la paroi latérale 16.

Dans l'exemple représenté, l'élément 10 fait partie d'un support de source lumineuse du dispositif d'éclairage 1, la paroi de fond 18 faisant partie de ce support. Le support de source lumineuse peut être lui-même être intégré à un boîtier d'un dispositif d'éclairage. En variante, cet élément 10 peut également faire partie du boîtier du dispositif d'éclairage, la paroi de fond 18 faisant par exemple partie d'une face arrière de ce boîtier.

Lorsque le joint plat 2 est mis en place, tel que visible sur la figure 2, ce joint 2 s'étend sensiblement perpendiculairement à la paroi latérale 16 de la cavité 12 et aux nervures 22, 22'. On notera que ces nervures 22, 22' peuvent se prolonger à l'intérieur de la cavité 12 pour un meilleur support du joint plat 2, tel que représenté sur les figures.

L'invention permet ainsi de manière simple d'éviter une accumulation d'eau, ou tout au moins de réduire l'épaisseur d'une couche d'eau, le long de la paroi latérale 16, entre les nervures 22, 22' et le joint 2, notamment sur la partie supérieure de la paroi latérale, préservant ainsi la structure du joint et son intégrité pour un maintien amélioré de la fonction d'étanchéité. Cette évacuation d'eau est en outre réalisée sans nuire au maintien du joint du fait que le bord d'appui 23 de chaque nervure 22, 22', y compris les nervures échancrées 22', vient appuyer sur au moins une partie du joint. L'élément 10 peut être ainsi être appliqué contre un support, ici une caisse de véhicule automobile de manière efficace.

## Revendications

1. Elément (10) d'un dispositif d'éclairage (1) présentant :
- une cavité (12) définie par une paroi latérale (16) et une paroi de fond (18), ladite cavité (12) logeant au moins un élément de connexion électrique (14), la cavité (12) présentant un bord libre d'appui (20) conformé pour recevoir un joint plat (2) destiné à être disposé sensiblement perpendiculairement à ladite paroi latérale (16),
- des nervures (22) solidaires d'une face (16a) de la paroi latérale (16) opposée à la cavité (12), ces nervures (22) s'étendant sensiblement perpendiculairement à la paroi latérale (16), chaque nervure (22) définissant un bord d'appui (23) conformé pour recevoir en appui ledit joint plat (2) lorsqu'il est disposé sensiblement perpendiculairement à ladite paroi latérale (16),
**caractérisé en ce qu'**au moins une des nervures (22) est une nervure échancrée (22'), dont le bord d'appui (23) présente une échancrure (24) s'étendant le long de la paroi latérale (16) depuis le bord libre d'appui (20) de la cavité (12).

2. Elément (10) selon la revendication 1, **caractérisé en ce que**, dans la position d'utilisation dudit dispositif d'éclairage (1), ladite au moins une nervure échancrée (22') est solidaire d'une partie supérieure (16b) de la paroi latérale (16) de la cavité.

3. Elément (10) selon l'une quelconque des revendications 1 ou 2, **caractérisé en ce qu'**il présente plusieurs nervures échancrées (22').

4. Elément (10) selon la revendication 3, **caractérisé en ce que** les nervures échancrées (22') sont des nervures adjacentes.

5. Elément (10) selon la revendication 4, **caractérisé en ce que**, dans la position d'utilisation dudit dispositif d'éclairage, les nervures échancrées (22') adjacentes sont solidaires d'une partie supérieure (16b) de la paroi latérale (16) formant un angle non nul par rapport à un plan horizontal.

6. Elément (10) selon la revendication 5, **caractérisé en ce que** les nervures échancrées (22') adjacentes présentent des échancrures (24) d'aire croissante dans une direction d'inclinaison de la partie supérieure (16b).

7. Elément (10) selon l'une quelconque des revendications 1 à 6, dans lequel ledit élément fait partie d'un boîtier de dispositif d'éclairage ou d'un support de source lumineuse du dispositif d'éclairage.

8. Dispositif d'éclairage (1) comprenant un élément (10) selon l'une des revendications 1 à 7 et un joint plat (2) en appui sur le bord libre d'appui (20) de la cavité et sur les bords d'appui (23) des nervures (22, 22') avec ou sans échancrures.

9. Véhicule automobile comprenant un dispositif d'éclairage (1) selon la revendication 8 monté sur un élément de caisse dudit véhicule, le joint plat (2) étant appliqué contre l'élément de caisse dudit véhicule.

## Patentansprüche

1. Element (10) einer Beleuchtungsvorrichtung (1) mit:
- einem Hohlraum (12), der durch eine Seitenwand (16) und eine Bodenwand (18) definiert ist, wobei der Hohlraum (12) mindestens ein elektrisches Verbindungselement (14) aufnimmt, wobei der Hohlraum (12) eine freie Auflagekante (20) aufweist, die so gestaltet ist, dass sie eine Flachdichtung (2) aufnimmt, die dazu vorgesehen ist, im Wesentlichen senkrecht zur Seitenwand (16) angeordnet zu sein,
- Rippen (22), die fest mit einer dem Hohlraum (12) gegenüberliegenden Seite (16a) der Seitenwand (16) verbunden sind, wobei sich die Rippen (22) im Wesentlichen senkrecht zur Seitenwand (16) erstrecken, wobei jede Rippe (22) einen Auflagerand (23) definiert, der so gestaltet ist, dass er die Flachdichtung (2) in Anlage aufnimmt, wenn sie im Wesentlichen senkrecht zur Seitenwand (16) angeordnet ist,
**dadurch gekennzeichnet, dass** mindestens eine der Rippen (22) eine ausgesparte Rippe (22') ist, deren Auflagerand (23) eine Aussparung (24) aufweist, die sich von der freien Auflagekante (20) des Hohlraums (12) entlang der Seitenwand (16) erstreckt.

2. Element (10) nach Anspruch 1, **dadurch gekennzeichnet, dass** in der Gebrauchsposition der Beleuchtungsvorrichtung (1) die mindestens eine ausgesparte Rippe (22') fest mit einem oberen Teil (16b) der Seitenwand (16) des Hohlraums verbunden ist.

3. Element (10) nach einem der Ansprüche 1 oder 2, **dadurch gekennzeichnet, dass** es mehrere ausgesparte Rippen (22') aufweist.

4. Element (10) nach Anspruch 3, **dadurch gekennzeichnet, dass** die ausgesparten Rippen (22') benachbarte Rippen sind.

5. Element (10) nach Anspruch 4, **dadurch gekennzeichnet, dass** in der Gebrauchsposition der Beleuchtungsvorrichtung die benachbarten ausgesparten Rippen (22') fest mit einem oberen Teil (16b) der Seitenwand (16) verbunden sind und einen von Null verschiedenen Winkel zu einer horizontalen Ebene ausbilden.

6. Element (10) nach Anspruch 5, **dadurch gekennzeichnet, dass** die benachbarten ausgesparten Rippen (22') Aussparungen (24) aufweisen, deren Fläche in einer Neigungsrichtung des oberen Teils zunimmt (16b) .

7. Element (10) nach einem der Ansprüche 1 bis 6, wobei das Element Teil eines Gehäuses einer Beleuchtungsvorrichtung oder eines Lichtquellenhalters der Beleuchtungsvorrichtung ist.

8. Beleuchtungsvorrichtung (1), umfassend ein Element (10) nach einem der Ansprüche 1 bis 7 und eine Flachdichtung (2), die an der freien Auflagekante (20) des Hohlraums und an den Auflagekanten (23) der Rippen (22, 22') mit oder ohne Aussparungen anliegt.

9. Kraftfahrzeug, umfassend eine Beleuchtungsvorrichtung (1) nach Anspruch 8, die an einem Karosserieelement des Fahrzeugs montiert ist, wobei die Flachdichtung (2) am Karosserieelement des Fahrzeugs anliegt.

## Claims

1. Element (10) of a lighting device (1) having:
- a cavity (12) defined by a lateral wall (16) and an end wall (18), said cavity (12) housing at least one electrical connection element (14), the cavity (12) having a free bearing edge (20) shaped so as to receive a flat seal (2) intended to be disposed substantially perpendicular to said lateral wall (16),
- ribs (22) as one with a face (16a) of the lateral wall (16) that faces away from the cavity (12), these ribs (22) extending substantially perpendicular to the lateral wall (16), each rib (22) defining a bearing edge (23) shaped so as to have said flat seal (2) bearing against it when said seal is disposed substantially perpendicular to said lateral wall (16),
**characterized in that** at least one of the ribs (22) is a notched rib (22'), of which the bearing edge (23) has a notch (24) extending along the lateral wall (16) from the free bearing edge (20) of the cavity (12).

2. Element (10) according to Claim 1, **characterized in that**, in the position of use of said lighting device (1), said at least one notched rib (22') is as one with an upper part (16b) of the lateral wall (16) of the cavity.

3. Element (10) according to either one of Claims 1 and 2, **characterized in that** it has a plurality of notched ribs (22').

4. Element (10) according to Claim 3, **characterized in that** the notched ribs (22') are adjacent ribs.

5. Element (10) according to Claim 4, **characterized in that**, in the position of use of said lighting device, the adjacent notched ribs (22') are as one with an upper part (16b) of the lateral wall (16) forming a non-zero angle with respect to a horizontal plane.

6. Element (10) according to Claim 5, **characterized in that** the adjacent notched ribs (22') have notches (24) of which the area increases in a direction of inclination of the upper part (16b).

7. Element (10) according to any one of Claims 1 to 6, wherein said element forms part of a lighting device housing or of a light source support of the lighting device.

8. Lighting device (1) comprising an element (10) according to one of Claims 1 to 7 and a flat seal (2) bearing on the free bearing edge (20) of the cavity and on the bearing edges (23) of the ribs (22, 22') with or without notches.

9. Motor vehicle comprising a lighting device (1) according to Claim 8 mounted on a body element of said vehicle, the flat seal (2) being pressed against the body element of said vehicle.
